# EUROPEAN PATENT APPLICATION

(11) **EP 1 707 977 A1**
(43) Date of publication of application: **04.10.2006**
(21) Application number: 06003812.2
(22) Date of filing: 24.02.2006
(51) Int. Cl.: G01S 1/00, H04B 1/707

(54) **Receiving device and signal demodulating method**

(30) Priority: 24.03.2005 JP 2005085702
(71) Applicant: SEIKO EPSON CORPORATION, Shinjuku-ku, Tokyo 163-0811 (JP)
(72) Inventor: Teruuchi, Norio, Suwa-shi,Nagano-ken 392-8502 (JP); Kurata, Tomoyuki, Suwa-shi,Nagano-ken 392-8502 (JP)
(74) Representative: HOFFMANN EITLE

(57) **Abstract**

A receiving device includes: a signal receiving section for receiving signals modulated by spread codes and transmitted; a frequency converting section for converting frequencies of received signals received by the signal receiving section into intermediate frequencies; an A/D converting section for converting the received signals whose frequencies are converted into intermediate frequencies into digital signals to produce sample values of the received signals; a base band reproducing section for removing intermediate frequencies from the sample values produced by the A/D converting section to reproduce base band signals; a local code producing section for producing local codes identical to the spread codes used by transmission side of the signals; a plurality of multipliers each of which multiplies the base band signals by the local codes and outputs a correlation value between the base band signals reproduced from the sample values and the local codes; an adder for adding the plural correlation values outputted from the plural multipliers; and an integrator for integrating the outputs from the adder for one cycle of the spread code and outputting the integral value of the correlation values. Each of the plural multipliers receives sets of the base band signal reproduced from the sample value and the local code, which sets received by the multipliers are produced at different chip positions for each of the plural multipliers.

## Description

This application claims the priorities benefit under 35 U.S.C.§ 119 of Japanese Patent Application No.2005-085702 filed on Mar 24, 2005, which is hereby incorporated in its entirety by reference.

### BACKGROUND

### 1. Technical Field

The present invention relates to a receiving device for receiving signals modulated by spread codes and a signal demodulating method.

### 2. Related Art

For receiving signals modulated by spread spectrum such as CDMA (Code Division Multiple Access) and demodulating the signals, the phase of the spread codes in the received signals needs to agree with the phase of the spread codes produced within a receiver (local codes). When the relative velocity between the receiving side and the transmitting side is large and the apparent frequency variation due to Doppler effect is great to such an extent that the variation cannot be ignored, the frequencies of the local codes need to be established considering Doppler effect.

For determining the phase and frequency agreements between the received signals and the local codes, the following method has been currently used, for example. First, local codes having slightly different phases and frequencies are sequentially produced. Then, the produced local codes are multiplied by the received signals and inputted to a correlator; and the agreements are determined based on correlation values outputted from the correlator.

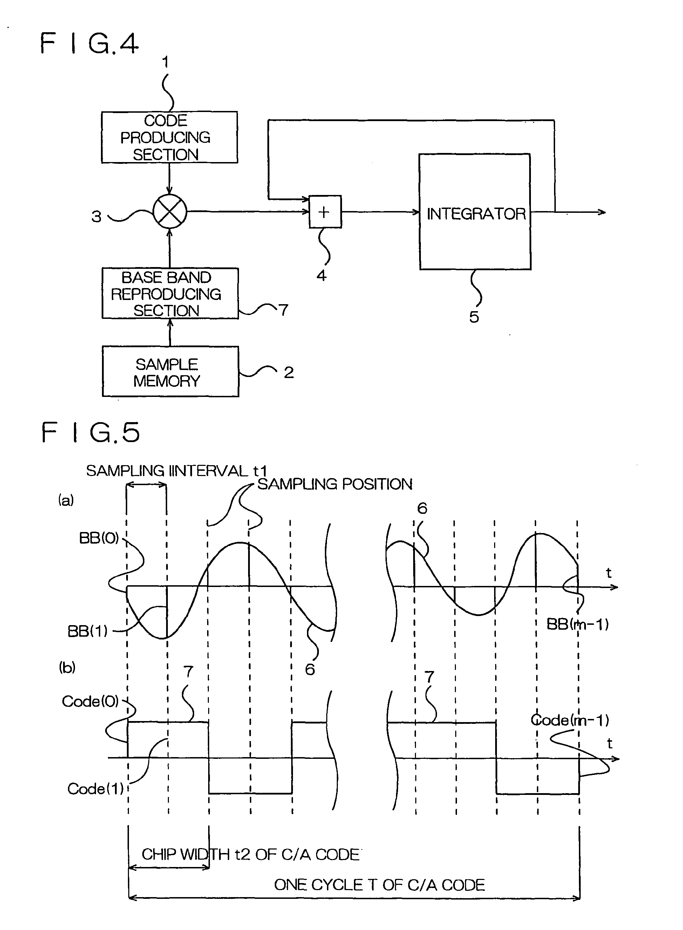

Fig. 4 shows a related-art circuit example used for determining the correlation. Local codes produced by a code producing section 1 are inputted to a multiplier 3. Received signals stored in a sample memory 2 are converted into digital signals to produce sample values, and carriers are removed from the sample values by a base band reproducing section 7 to obtain base band signals. The base band signals are inputted to the multiplier 3, and a correlation value for each sample is calculated based on the inputted local codes and base band signals. Respective correlation values for the samples are inputted to an adder 4, and the correlation values for one cycle of C/A (Clear and Acquisition) codes are integrated by an integrator 5. Then, it is determined that the phase of the received signals agrees with the phase of the local codes when the integral value is equal to or larger than a predetermined threshold, for example.

A method capable of determining the correlation with high efficiency is known, where a plurality of local codes having different phases and frequencies are simultaneously produced and their correlations with the received signals are determined in a concurrent manner.

For determining the correlation by this method, it is required to prepare a plurality of local code generators, correlators twice as many as the local code generators, and integrators as many as the local code generators. The integrator is generally constituted by a number of flip-flops and therefore has a large circuit size, which results in large power consumption and higher cost of the circuit.

JP-A-7-181243 discloses a demodulating circuit which reduces the numbers of local code generators and correlators by preparing a larger number of transmitters for converting output signals from the correlators into base band signals than in the related-art structure. In the structure according to this reference, the number of the transmitters is increased but the numbers of the local code generators and correlators are decreased, and therefore the circuit size of the entire receiver can be reduced.

However, according to the structure shown in JP-A-7-181243, it is impossible to decrease the number of the integrators (correlators) which occupy a large area in the entire circuit.

### SUMMARY

Accordingly, an advantage of some aspects of the invention is to provide a receiving device and a signal demodulating method capable of determining correlations with high efficiency using correlators having small circuit size.

A receiving device according to a first aspect of the invention includes: a signal receiving section for receiving signals modulated by spread codes and transmitted; a frequency converting section for converting frequencies of received signals received by the signal receiving section into intermediate frequencies; an A/D converting section for converting the received signals whose frequencies are converted into the intermediate frequencies into digital signals to produce sample values of the received signals; a base band reproducing section for removing the intermediate frequencies from the sample values produced by the A/D converting section to reproduce base band signals; a local code producing section for producing local codes identical to the spread codes used by transmission side of the signals; a plurality of multipliers each of which multiplies the base band signals by the local codes and outputs a correlation value between the base band signals reproduced from the sample values and the local codes; an adder for adding the plural correlation values outputted from the plural multipliers; and an integrator for integrating the outputs from the adder for one cycle of the spread code and outputting an integral value of the correlation values. Each of the plural multipliers receives sets of the base band signal reproduced from the sample value and the local code, which sets received by the multipliers are produced at different chip positions for each of the plural multipliers.

In the structure according to the first aspect of the invention, the A/D converting section converts the received signals whose frequencies converted into intermediate frequencies into digital data and produces the sample values. The base band reproducing section removes carriers from the sample values to produce base band signals.

The local code producing section produces local codes identical to the codes on the transmission side to use the local codes for the correlation calculation.

The base band signals reproduced from the sample values of the received signals and the local codes are inputted to the plural multipliers to calculate correlation values. The base band signals reproduced from the sample values and the local codes to be inputted to the plural multipliers are signals produced at different chip positions for each of the multipliers. Thus, the plural multipliers simultaneously calculate the correlation values at different chip positions. The chip position herein means the position of the sample value or local code from the top of the spread codes, and is a numerical value represented by integers of 0 or larger. For example, the chip position of the initial sample value in the spread codes is "0", and the chip position of the 10th sample value from the top in the spread codes is "9".

The correlation values outputted from the respective multipliers are inputted to one or plural adders. The outputs therefrom are then inputted to the integrator to calculate the integral value of the correlation values for one cycle of the spread codes.

In the receiving device according to the invention, as mentioned above, correlation values corresponding to the plural chips are calculated by the adder or adders at a time before inputted to the integrator as described above. Thus, the number of the correlators required for obtaining the integral values of the correlation values for one cycle of the spread codes can be reduced. For example, in the structure where two multipliers for multiplying the base band signals reproduced from the sample values by the local codes calculate the correlation values for two chips before they are inputted to the integrator, the number of the correlators can be reduced to half of the number of the correlators required when only one multiplier is provided.

Accordingly, in the receiving device according to the invention, the circuit size of the entire receiving device can be considerably reduced compared with the structure where one multiplier calculates the correlation values for one chip at a time, and the consumption power of the receiving device can be also greatly reduced. In addition, the reduction of the circuit size does not lower the performance of the receiver, and requires almost the same time to calculate correlations as the time required for the correlation calculation in the related-art receiving device.

According to a second aspect of the invention, it is preferable that the chip positions of the sets of the base band signal reproduced from the sample value and the local code to be received by the multipliers are serial for each of the multipliers in the structure according to the first aspect of the invention.

In the structure according to the second aspect of the invention, the chip positions of the sets of the base band signal reproduced from the sample value and the local code to be received by the multipliers are serial for each of the multipliers. For example, when two multipliers are equipped, the base band signal reproduced from the sample value and the local code which are produced at the chip position 1 are inputted to the first multiplier and the base band signal reproduced from the sample value and the local code which are produced at the chip position 2 are inputted to the second multiplier.

Thus, production and output of the local codes can be easily controlled.

According to a third aspect of the invention, it is preferable that the received signals are signals transmitted from a plurality of GPS satellites and modulated by C/A codes, and that the local code producing section produces C/A codes peculiar to each of the plural GPS satellites in the structure according to the first aspect of the invention.

In the structure according to the third aspect of the invention, the receiving device receives signals transmitted from the GPS satellites and demodulates the signals so that the position of the receiving device can be calculated based on the orbit information of the GPS satellites and the like. In the field of the GPS positioning method, this processing is called "capture of GPS satellite".

The receiving device according to the third aspect of the invention has similar structure to that of the receiving device according to the first aspect of the invention. Therefore, while time required for capturing the GPS satellites is almost the same as that required for capturing those by the related-art receiver, the circuit size of the receiver can be considerably reduced and the power consumption can be greatly decreased in the structure according to the third aspect of the invention.

Therefore, a GPS receiving device according to the third aspect of the invention is appropriately used for a portable device such as a cellular phone which requires considerable size reduction and consumption power decrease.

A method for demodulating signals modulated by spread codes according to a fourth aspect of the invention includes: a signal receiving step in which a signal receiving section receives signals modulated by spread codes and transmitted; a frequency converting step in which a frequency converting section converts frequencies of received signals received by the signal receiving section into intermediate frequencies; an A/D converting step in which an A/D converting section converts the received signals whose frequencies are converted into intermediate frequencies into digital signals to produce sample values of the received signals; a local code producing step in which a local code producing section produces local codes identical to the spread codes used by the transmission side of the signals; a correlation value calculating step in which a plurality of multipliers each of which multiplies the sample values by the local codes and outputs a correlation value between base band signals reproduced from the sample values and the local codes; a correlation value adding step in which an adder adds the plural correlation values outputted from the plural multipliers; and an integral value calculating step in which an integrator integrates the outputs from the adder for one cycle of the spread code and outputs the integral value of the correlation values. In the correlation value calculating step, each of the plural multipliers receives sets of the base band signal reproduced from the sample value and the local code, which sets received by the multipliers are produced at different chip positions for each of the plural multipliers.

The structure according to the fourth aspect of the invention can offer similar advantages to those of the structure according to the first aspect of the invention.

### BRIEF DESCRIPTION OF THE DRAWINGS

The invention will be described with reference to the accompanying drawings, wherein like numbers refer to like elements.

Fig. 1 is a block diagram schematically showing a GPS receiver in an embodiment according to the invention.

Fig. 2 schematically illustrates an example of a circuit structure of a correlation determining section.

Fig. 3 schematically illustrates another example of the circuit structure of the correlation determining section.

Fig. 4 schematically illustrates a circuit structure of a relate-art correlation determining section.

Fig. 5 schematically shows a relationship between sample data and local codes.

### DESCRIPTION OF EXEMPLARY EMBODIMENT

A preferred embodiment according to the invention is hereinafter described in detail with reference to the appended drawings.

The embodiment described and depicted herein is a specific preferred example according to the invention and various limitations which are preferable from technical viewpoints are given thereto. However, the scope of the invention is not limited to any of those limitations unless any description which limits the scope of the invention is particularly given.

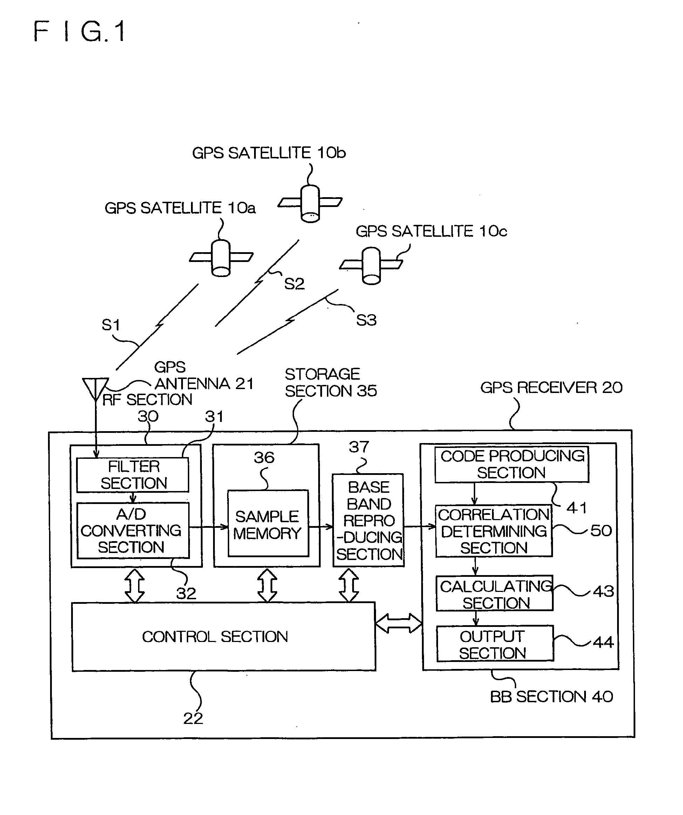

Fig. 1 is a function block diagram schematically showing a GPS receiver 20 in an embodiment according to the invention. The GPS receiver 20 generally includes a control section 22 for controlling the entire receiver, an RF (Radio Frequency) section 30 for performing processes from receiving signals to converting the signals into digital signals, a storage section 35 for storing various data and programs, and a BB (Base Band) section 40 for determining correlations of the received signals and performing other processes.

A GPS antenna 21 as an example of a signal receiving section receives a signal S1 and the like which are transmitted from a plurality of GPS satellites such as a GPS satellite 10a and are receivable at a receiving position. The signal S1 and the like are signals modulated by C/A codes as an example of spread codes on the transmission side, and contain data of GPS time and orbit information of the GPS satellites. The respective GPS satellites use their peculiar C/A codes. Since the C/A codes used by the respective GPS satellites are known, signals transmitted from the target GPS satellite can be separated from the received signals to obtain desired data on the receiving side.

The signal S1 and the like received by the GPS antenna 21 are inputted to a filter section 31 as an example of a frequency converting section to be converted into signals having intermediate frequencies. The filter section 31 outputs two types of signals (I signals and Q signals) which generally cross each other at right angles.

The received signals whose frequencies are converted into intermediate frequencies are inputted to an A/D converting section 32, where the respective signals are sampled. In this process, sample values of I signals and Q signals are acquired. These sample values are temporarily stored in a sample memory 36 in the storage section 35.

A code producing section 41 as an example of a local code producing section produces C/A codes identical to the C/A codes used by the GPS satellite at transmission.

Base band signals reproduced from the sample values and local codes are inputted to a correlation determining section 50. The correlation determining section 50 calculates the correlation values between both types of signals, and determines that the phases of both the signals agree when the correlation values are equal to or larger than a predetermined threshold value.

For determining positions by the method of GPS, at least three GPS satellites need to be captured. Thus, the circuit for calculating correlations (capture of the GPS satellites) provided on the GPS receiver tends to be large-sized.

Under the agreement between the phases of the received signals and the local codes, data contained in the received signals is allowed to be decoded. A calculating section 43 calculates the position of the GPS receiver 20 based on the orbit information and GPS time contained in the data obtained from the decoded received signals.

The position calculated by the calculating section 43 is outputted through an output section 44 to a display device (not shown), for example.

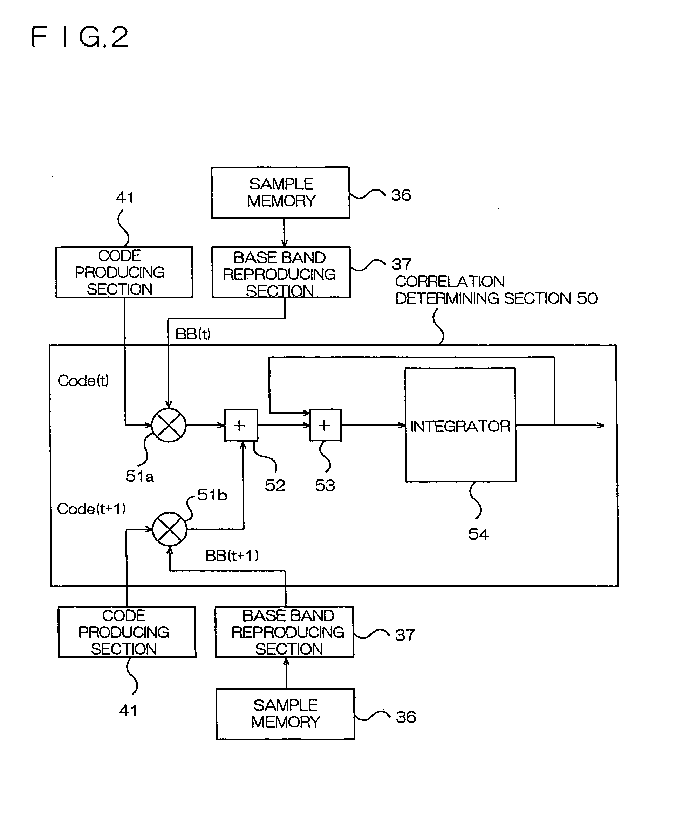

Fig. 2 is a circuit diagram schematically showing the correlation determining section 50 and other sections. As mentioned above, since sample data of I signal type and Q signal type are contained, two sets of correlation determining sections are required to calculate correlations of both the sample data. Fig. 2 illustrates one set of the correlation determining sections.

The sample memory 36 stores sample values of the received signals for one cycle of the C/A code. It is assumed that the number of the sample values for one cycle is m in this embodiment.

The base band signals reproduced from the respective sample values are 6-bit integers having symbols, for example, because the correlation values are calculated considering weights. The sample data is hereinafter represented as BB(x) when the chip position is x (x is an integer established in the range from 0 to (m-1)).

The code producing section 41 stores the C/A codes for one cycle which are known and used particularly by the respective GPS satellites. The number of divisions for one cycle is the same number m as that of the sample values. The value of each code is -1 or 1. The local code when the chip position is x (x is an integer established in the range from 0 to (m-1)) is hereinafter represented as Code(x).

Fig. 5 schematically shows the relationships between the base band signals reproduced from the sample values and the local codes.

A signal 6 shown in (a) in Fig. 5 is a received signal converted into a signal having intermediate frequency to be inputted to the A/D converting section 32. The signal 6 is sampled at sampling intervals t1 so that m sample values from BB (0) to BB (m-1) can be acquired for one cycle of the C/A codes.

A signal 7 shown in (b) in Fig. 5 is a local code produced by the code producing section 41. The C/A codes transmitted from each GPS satellite is divided at the sampling intervals t1 for one cycle so that m codes from Code(0) to Code (m-1) can be produced similarly to the sample values. The position at which high correlation between the sample values can be obtained are detected by varying the position of Code (0) and a chip width t2 of the C/A codes, and the GPS satellite is captured based on the detected position.

The C/A codes used by each GPS satellite are constituted by 1023 chips. Since the chip width t2 is approximately 1µs, one cycle of the C/A codes is approximately 1ms. The sampling interval t1 is generally half of t2 or smaller.

At each operation clock, a set of BB (2n) and Code (2n) are sequentially inputted to a multiplier 51a shown in Fig. 2. The symbol n is an integer in the range from 0 to (m/2-1) in this embodiment, and increases by 1 at each clock.

At the time when BB(2n) and Code(2n) are inputted to the multiplier 51a, BB(2n+1) and Code(2n+1) are inputted to a multiplier 51b.

More specifically, data from BB(0) and Code(0), BB (2) and Code (2) to BB (m-2) and Code (m-2) are inputted to the multiplier 51a in this order. And data from BB (1) and Code (1) , BB (3) and Code (3) to BB (m-1) and Code (m-1) are inputted to the multiplier 51b in this order in correspondence with the above data in putted to multiplier 51a.

The outputs from the multiplier 51a and the multiplier 51b are inputted to an adder 52. The adder 52 then outputs {BB(2n)*Code(2n)}+{BB(2n+1)*Code(2n+1)}. This indicates that the correlation values at two chip positions are calculated at a time.

The output from the adder 52 is inputted to an adder 53. Output from an integrator 54 is also inputted to the adder 53. The output from the adder 53 is inputted to the integrator 54.

The integrator 54 outputs the integral value to the following circuit and the adder 53.

Thus, the value outputted from the integrator 54 when input of n corresponding to m/2-1 is completed is the integral value of the correlation values for one cycle of the C/A codes.

The integrator 54 is constituted by a number of flip-flops (hereinafter referred to as F/Fs). The required number of F/Fs is determined by the following method.

Initially, the number of times of inputting data to the integrator 54 required for obtaining the integral value of the correlation values for one cycle of the C/A codes is m/2. When the number of bits contained in each row of the F/Fs determined by the number of bits required for representing the integral value is k, the required number of F/Fs is kxm/2.

Fig. 4 is a circuit diagram showing the correlation determining section which includes one multiplier. The local codes produced by the code producing section 1 and the base band signals produced from the sample values stored in the sample memory 2 are inputted to the multiplier 3 to calculate the correlation value for one chip. The correlation values for respective chips are inputted to the adder 4 one by one, and the correlations for one cycle of the C/A codes are integrated by the integrator 5.

In this related-art circuit structure, since the number of times of inputting the correlation values to the integrator 5 is m, the required number of F/Fs is kxm.

In the above description, it is assumed that the correlation values for one cycle of the C/A codes are integrated at a time. However, the correlation values may be divided into several parts and calculated several times.

When the integrating calculation is performed at a time, the required number of F/Fs constituting the integrator 54 increases (though the required number in this case is half the number in the related art as mentioned above). However, the correlation calculation can be completed in short time (with decreased clock number).

When one cycle of the C/A codes is divided into several parts and the integrating calculation of the correlations is performed several times, the number of times of inputting to the integrator 54 required per one integrating calculation decreases. Thus, while the time required for this processing increases, the number of the F/Fs constituting the integrator 54 further decreases. When calculation is divided into four parts, for example, the required number of F/Fs is decreased to one fourth, i.e., kxm/8.

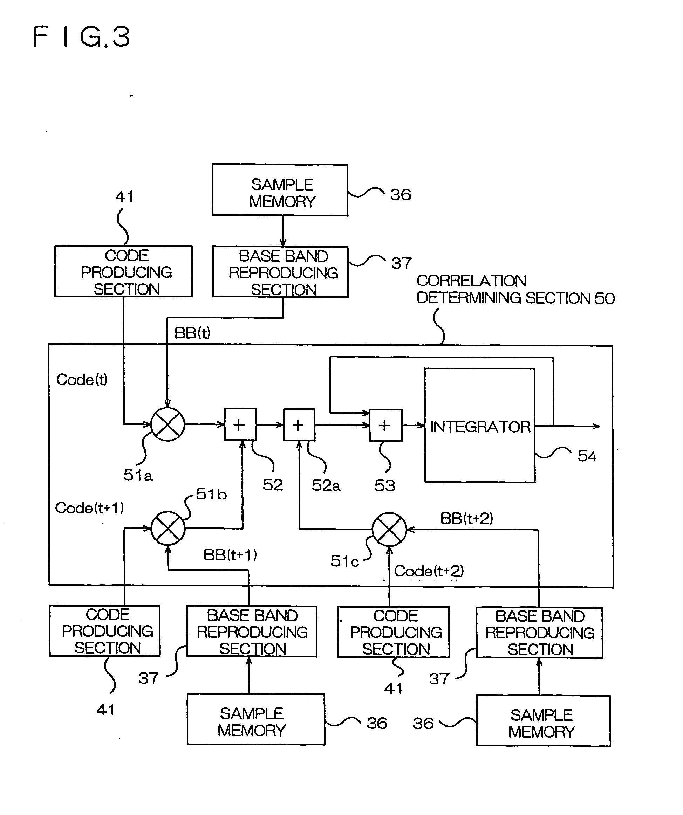

Fig. 3 is a circuit diagram showing another example structure of the correlation determining section 50 and other sections.

The structure shown in Fig. 3 is different from the structure shown in Fig. 2 in that a multiplier 51c and an adder 52a are added to the circuit in Fig. 2 so that the correlation values for three chips can be calculated at a time.

The circuit shown in Fig. 3 has the same structure as that of the circuit shown in Fig. 2 up to the process where the outputs from the multiplier 51a and the multiplier 51b are inputted to the adder 52. The local codes produced by the code producing section 41 and the base band signals reproduced from the sample values of the received signals by the base band reproducing section 37 are inputted to the multiplier 51c. The two types of signals can be represented by Code (t+2) and BB (t+2) when the signals simultaneously inputted to the multiplier 51a are Code(t) and BB(t).

The output from the multiplier 51c is inputted to the adder 52a together with the output from the adder 52. Thus, the correlation values for three chips are calculated by the adder 52a.

The output from the adder 52a is then inputted to the adder 53, and the integral value of the correlation values is calculated by the integrator 54 in the same manner as in the circuit shown in Fig. 2.

In the circuit structure shown in Fig. 3, the correlation values for three chips are calculated at a time, and the number of F/Fs constituting the integrator 54 can be decreased to one third of that required for calculating the correlation value for one chip at a time (see Fig. 4).

Accordingly, the GPS receiver 20 in this embodiment calculate correlations using the correlation determining section 50 which includes the integrator 54, which is constituted by half number of F/Fs used in the related-art structure.

In a typical GPS receiver, the circuit size of the BB section is larger than that of the RF section. Also, the proportion of the correlation determining section in the circuit size of the BB section is large.

Thus, in the structure including the GPS receiver 20 according to the invention, the circuit size of the entire receiver can be considerably reduced compared with the related-art structure. Since the power consumption of the integrated circuit is substantially proportional to the circuit size when the operating frequency and operating voltage are constant, the power consumption can be greatly reduced accordingly. Moreover, the GPS receiver 20 is appropriately used in a portable device such as a cellular phone which is required to be small-sized and low power consuming.

The scope of the invention is not limited to the embodiment described herein. For example, the invention includes a structure having combined characteristics of the examples shown above.

## Claims

1. A receiving device, comprising:
a signal receiving section for receiving signals modulated by spread codes and transmitted;
a frequency converting section for converting frequencies of received signals received by the signal receiving section into intermediate frequencies;
an A/D converting section for converting the received signals whose frequencies are converted into the intermediate frequencies into digital signals to produce sample values of the received signals;
a base band reproducing section for removing the intermediate frequencies from the sample values produced by the A/D converting section to reproduce base band signals;
a local code producing section for producing local codes identical to the spread codes used by transmission side of the signals;
a plurality of multipliers each of which multiplies the base band signals by the local codes and outputs a correlation value between the base band signals reproduced from the sample values and the local codes;
an adder for adding the plural correlation values outputted from the plural multipliers; and
an integrator for integrating the outputs from the adder for one cycle of the spread code and outputting an integral value of the correlation values, wherein:
each of the plural multipliers receives sets of the base band signal reproduced from the sample value and the local code, which sets received by the multipliers are produced at different chip positions for each of the plural multipliers.

2. A receiving device according to claim 1, wherein the chip positions of the sets of the base band signal reproduced from the sample value and the local code to be received by the respective multipliers are serial chip positions for each of the multipliers.

3. A receiving device according to claim 1, wherein:
the received signals are signals transmitted from a plurality of GPS(Global Positioning System) satellites and modulated by C/A (Clear and Acquisition) codes; and
the local code producing section produces C/A codes peculiar to each of the plural GPS satellites.

4. A method for demodulating signals modulated by spread codes, comprising:
a signal receiving step in which a signal receiving section receives signals modulated by spread codes and transmitted;
a frequency converting step in which a frequency converting section converts frequencies of received signals received by the signal receiving section into intermediate frequencies;
an A/D converting step in which an A/D converting section converts the received signals whose frequencies are converted into intermediate frequencies into digital signals to produce sample values of the received signals;
a local code producing step in which a local code producing section produces local codes identical to the spread codes used by transmission side of the signals;
a correlation value calculating step in which a plurality of multipliers each of which multiplies the sample values by the local codes and outputs a correlation value between base band signals reproduced from the sample values and the local codes;
a correlation value adding step in which an adder adds the plural correlation values outputted from the plural multipliers; and
an integral value calculating step in which an integrator integrates the outputs from the adder for one cycle of the spread code and outputs the integral value of the correlation values, wherein:
each of the plural multipliers receives sets of the base band signal reproduced from the sample value and the local code, which sets received by the multipliers are produced at different chip positions for each of the plural multipliers in the correlation value calculating step.
